# EUROPÄISCHE PATENTSCHRIFT

(11) **EP 1 150 140 B1**
(45) Veröffentlichungstag und Bekanntmachung des Hinweises auf die Patenterteilung: **18.11.2009**
(21) Anmeldenummer: 01110340.5
(22) Anmeldetag: 26.04.2001
(51) Int. Cl.: G02B 3/10, G02C 7/02

(54) **Verfahren zur Herstellung einer Brillenlinse, Brillenlinse und Brillenlinsefamilie**
Manufacturing method for a spectacle lens, spectacle lens and family of spectacle lenses
Méthode de fabrication d'une lentille de lunettes, lentille de lunettes et famille de lentilles de lunettes

(30) Priorität: 28.04.2000 DE 10020914
(43) Veröffentlichungstag der Anmeldung: 31.10.2001
(73) Patentinhaber: Carl Zeiss Vision GmbH, 73430 Aalen (DE)
(72) Erfinder: Kelch, Gerhard, 73431 Aalen (DE); Wietschorke, Helmut, 73433 Aalen-Wasseralfingen (DE)
(74) Vertreter: Diehl & Partner

(56) Entgegenhaltungen:
- EP-A- 0 562 336
- EP-A- 0 809 127
- EP-A- 0 857 993
- EP-A- 0 880 046
- WO-A-98/12590
- DE-A- 4 210 008
- DE-A- 19 917 314
- US-A- 4 514 061

## Beschreibung

Die Erfindung betrifft eine Brillenlinsenfamilie, welche eine Mehrzahl von Brillenlinsen zur Korrektion von Fehlsichtigkeiten von Brillenträgern umfasst.

Eine Brillenlinse zur Korrektion einer Fehlsichtigkeit ist charakterisiert durch eine prismatische Soll-Wirkung zur Korrektion einer Fehlsichtigkeit sowie eine dioptrische Soll-Wirkung zur Korrektion der Fehlsichtigkeit, wobei die dioptrische Soll-Wirkung insbesondere eine sphärische Soll-Wirkung zur Korrektion einer sphärischen Fehlsichtigkeit und eine astigmatische Soll-Wirkung zur Korrektion einer astigmatischen Fehlsichtigkeit umfasst. Hierzu sind die Stärken eines sphärischen Schliffes und eines Zylinder- bzw. Torusschliffes der Linse sowie dessen Orientierung zu definieren. Ferner stellt eine derartige Brillenlinse häufig auch eine Multifokaleigenschaft bereit, welche eine mangelnde Adaptationsfähigkeit des Auges beim Wechsel der Betrachtung eines entfernten Gegenstandes zu einem nahegelegenen Gegenstand unterstützt. Hierzu weist die Brillenlinse einen sogenannten Fernbezugspunkt und einen von diesem mit Abstand angeordneten sogenannten Nahbezugspunkt auf, wobei der Blick des Benutzers die Brillenlinse beim Betrachten des entfernten Gegenstandes im Bereich des Fernbezugspunkts durchsetzt und beim Betrachten eines nahegelegenen Gegenstandes mit nach unten gerichteten Blick im Bereich des Nahbezugspunkts durchsetzt. Die mittlere dioptrische Wirkung der Brillenlinse am Nahbezugspunkt unterscheidet sich von der mittleren dioptrischen Wirkung der Brillenlinse am Fernbezugspunkt um einen vorbestimmten Wert, der sogenannten "Addition". Eine für einen bestimmten Benutzer angepasste Brillenlinse ist somit charakterisiert durch wenigstens die Parameter dioptrische Soll-Wirkung, gegebenenfalls deren Ausrichtung und die gewünschte Addition.

Die Stärken der spärischen und der astigmatischen Wirkungen werden hierbei üblicherweise in Dioptrien angegeben, wobei auf eine nächste viertel Dioptrie auf- oder abgerundet wird.

Der Begriff "mittlere sphärische Wirkung" ist hierbei definiert als der Mittelwert des ersten und zweiten Hauptschnitts, wie dies beispielsweise aus DIN 58208, Teil 1-25, hervorgeht.

Aufgrund der Vielzahl der wenigstens zu verwendenden charakterisierenden Parameter und deren individuelle Verschiedenheit zwischen einzelnen Brillenträgern ist ersichtlich, dass eine automatisierte Fertigung im Hinblick auf die die Brillenlinse charakterisierenden Parameter äusserst flexibel sein muss.

Aus der EP 0857993 A2 ist eine Brillenlinse zur Korrektion einer Fehlsichtigkeit eines Brillenträgers bekannt, wobei die Linse ebenfalls eine Multifokaleigenschaft aufweist. Bei dieser herkömmlichen Brillenlinse ist die vom Auge des Brillenträgers weggewandte Linsenfläche sphärisch oder rotationssymmetrisch asphärisch ausgebildet. Diese Gestalt der vom Auge weggewandten Brillenfläche ist mehreren Brillenlinsen zur Korrektion unterschiedlicher Fehlsichtigkeiten gemeinsam, so dass wenigstens diese Linsenfläche selbst in der individualisierten Massenfertigung einfach herstellbar ist. Die Korrektion der Fehlsichtigkeit, d.h. die Bereitstellung eines Sphären- oder/und eines Torusschliffes, sowie die Multifokaleigenschaft werden durch die dem Auge des Brillenträgers zugewandte Brillenfläche bereitgestellt.

Als nachteilig bei bekannten Brillenlinsen hat sich erwiesen, dass bei der gemeinsamen Fertigung von Brillenlinsen mit bestimmten unterschiedlichen Kombinationen an Fehlsichtigkeiten eine Abbildungsqualität der Brillenlinsen sich als verbesserungsbedürftig erweist.

Es ist eine Aufgabe der vorliegenden Erfindung, eine Brillenlinsenfamilie vorzuschlagen, deren Mitglieder unterschiedliche Fehlsichtigkeiten kompensieren, jedoch in einer Massenfertigung unter Beibehaltung einer vergleichsweise guten Abbildungsqualität gemeinsam herstellbar sind.

Diese Aufgabe wird gelöst durch die Herstellung einer Brillenlinsenfamilie mit den in Anspruch 1 angegebenen Merkmalen. Vorteilhafte Ausführungsformen sind in den Unteransprüchen angegeben.

Hierdurch erfolgt die Bereitstellung einer Brillenlinsenfamilie mit einer Mehrzahl von Brillenlinsen, welche sich besonders gut zur individuellen Massenfertigung eignen. Der erfindungsgemäßen Brillenlinsenfamilie liegt eine gemeinsame Auslegung der Multifokaleigenschaft zugrunde. Diese Auslegung umfasst bei gegebenem Nahbezugspunkt und gegebenem Fernbezugspunkt sowie dem Unterschied in der mittleren dioptrischen Wirkung an Fern- und Nahbezugspunkt ("Addition") eine vorbestimmte Verteilung astigmatischer und sphärischer Abweichungen im Gesichtsfeld des Brillenträgers. Diese Verteilung der sphärischen und astigmatischen Abweichungen kann aufgrund der Multifokaleigenschaft die Brillenlinsenfamilie charakterisieren und unterscheidet sie von anderen Brillenlinsenfamilien. Andererseits unterscheiden sich einzelne Mitglieder der Brillenlinsenfamilie hinsichtlich der Fehlsichtigkeitskorrektion, d.h. der dioptrischen Soll-Wirkung oder/und der prismatischen Soll-Wirkung, während sie im wesentlichen gleiche oder ähnliche Multifokaleigenschaften zeigen. Derartige Brillenlinsen können als Brillenlinsenfamilie besonders vorteilhaft gemeinsam einer Fertigung unterzogen werden.

Einzelne Mitglieder der Brillenlinsenfamilie unterscheiden sich paarweise hinsichtlich ihrer sphärischen oder/und astigmatischen Soll-Wirkung um weniger als 1 Dioptrie, insbesondere um weniger als 0,5 Dioptrien, und insbesondere um 0,25 Dioptrien.

1 Dioptrie, 0,5 Dioptrien bzw. 0,25 Dioptrien sind somit der "Rasterabstand", mit dem die Brillenlinsen der Brillenlinsenfamilie hinsichtlich sphärischer und astigmatischer Soll-Wirkung angeboten werden.

Obwohl die Funktion der Fehlsichtigkeitskorrektion beispielsweise der dem Auge zugewandten Linsenfläche durch deren Gestaltung zukommt und die Multifokaleigenschaften der Mitglieder der Brillenlinsenfamilie im wesentlichen gleich oder ähnlich sind und durch die vom Auge weggewandte Linsenfläche bereitgestellt werden, weisen die vom Auge weggewandten Linsenflächen der Brillenlinsen gleichwohl voneinander verschiedene Gestalten auf. Dies liegt daran, dass die Auslegung der Multifokaleigenschaft zu einer Grundgestalt der vom Auge wegweisenden Linsenfläche führt. Diese Grundgestalt wird dann allerdings abgewandelt, um der Auswirkung der verschiedenen sphärischen, astigmatischen bzw. prismatischen Soll-Wirkungen auf die Multifokaleigenschaft Rechnung zu tragen und diese derart zu beeinflussen, dass die Multifokaleigenschaften der Brillenlinsenfamilie in ihrer Wirkung auf den Träger im wesentlichen gleich oder ähnlich sind.

Die Abwandlung von der Grundgestalt der vom Auge weggewandten Linsenfläche umfasst vorteilhafterweise ferner die bereits vorangehend erläuterten Parameter Augenabstand des Brillenträgers oder/und Abstand zwischen Auge und Brillenlinse oder/und Neigung der Brillenlinse bezüglich einer Blickrichtung oder/und bevorzugter Abstand zwischen betrachtetem Objekt im Nahbereich und Auge bzw. Brillenlinse oder/und eine prismatischen Soll-Wirkung der Brillenlinse zur Korrektion einer weiteren Fehlsichtigkeit oder/und die Dicke der Brillenlinse.

Die Brillenlinse zur Korrektion einer Fehlsichtigkeit eines Brillenträgers weist eine dem Auge des Brillenträgers zugewandte Linsenfläche und eine von dem Auge des Brillenträgers weggewandten Linsenfläche auf.

Vorzugsweise ist die Funktion der dem Auge zugewandten Linsenfläche unmittelbar auf die Korrektion der Fehlsichtigkeit ausgerichtet und ihre Gestalt ist deshalb lediglich aus einer Sphäre oder einem Torus gebildet, so dass hierdurch eine dioptrische Soll-Wirkung erzeugt wird, welche die Fehlsichtigkeit des Brillenträgers kompensiert.

Vorzugsweise umfasst die Funktion der vom Auge weggewandten Linsenfläche zum einen die Bereitstellung einer Multifokaleigenschaft und zum anderen die Kompensation gewisser Abbildungsänderungen, wie sie sich aufgrund von Wechselwirkungen zwischen der auf der dem Auge zugewandten Brillenfläche bereitgestellten Fehlsichtigkeitskorrektion und der auf der vom Auge weggewandten Linsenfläche bereitgestellten Multifokaleigenschaft ergeben und wie sie sich ferner ergeben durch die Wechselwirkung zwischen der Multifokaleigenschaft und der spezifischen geometrischen Anordnung der Brillenlinse relativ zum Brillenträger. Die durch die geometrische Anordnung der Brillenlinse bezüglich des Brillenträgers bedingten Änderungen umfassen insbesondere folgende Parameter:
- den Abstand zwischen den beiden Augen des Brillenträgers.
   Die Multifokaleigenschaft der Brillenlinse wird von dem Brillenträger dann wie gewünscht wahrgenommen, wenn sein Blick bei Betrachtung eines entfernten Objekts den Fernbezugspunkt und entsprechend bei Betrachtung eines nahegelegenen Objekts den Nahbezugspunkt der Brillenlinse durchsetzt. Es hat sich herausgestellt, dass dieses Erfordernis dann besser erfüllt ist, wenn bei einem Brillenträger mit großem Augenabstand der Nahbezugspunkt bezüglich des Fernbezugspunktes weiter nach innen versetzt ist als bei einem Brillenträger mit kleinem Augenabstand.
- der Abstand zwischen dem Auge des Brillenträgers und der Brillenlinse, wenn diese von dem Brillenträger getragen wird, d.h. in deren Gebrauchsstellung.
   Es hat sich herausgestellt, dass die Wirkung der Multifokaleigenschaft auf den Brillenträger ebenfalls von dem Abstand zwischen Auge und Brillenlinse beeinflusst wird und entsprechend eine korregierende Gestaltung der vom Auge weggewandten Linsenfläche dahingehend erfolgen kann, dass die Multifokaleigenschaft vom Brillenträger möglichst optimal wahrgenommen wird. Hierbei ist es insbesondere günstig, diesen Abstand auch in die Korrektur der Wechselwirkung zwischen Fehlsichtigkeitskorrektion und Multifokaleigenschaft einzubeziehen und ferner ist es auch günstig zur Festlegung der Lage von Fernbezugspunkt und Nahbezugspunkt relativ zueinander sowohl den Augenabstand als auch den Abstand zwischen Auge und Brillenlinse zu berücksichtigen.
- die Neigung der Brillenlinse bezüglich des Brillenträgers, wenn dessen Blick beispielsweise durch den Fernbezugspunkt auf ein entferntes Objekt gerichtet ist.
   Auch die durch eine Änderung der Brillenlinsenneigung sich ändernde Wechselwirkung zwischen Fehlsichtigkeitskorrektion und Multifokaleigenschaft können bei bekannter Brillenlinsenneigung vermindert werden.
- bevorzugter Abstand zwischen dem Auge des Brillenträgers und einem im Nahbereich zu betrachtenden Objekt.
   Die Abbildungseigenschaften der Brillenlinse können im Hinblick auf ein angenehmes Empfinden des Brillenträgers bei der Umstellung von Fernsicht auf Nahsicht dahingehend günstig beeinflusst werden, dass der bevorzugte Abstand des im Nahbereich angeordneten Objekts von der Brillenlinse bzw. dem Auge des Brillenträgers bereits als Korrektur bei der Gestaltung der von dem Auge abgewandeten Linsenfläche einbezogen wird.
- umfasst die Sehfehlerkompensation auch eine prismatische Soll-Wirkung der Brillenlinse, so ist es ebenfalls vorteilhaft, eine Wechselwirkung zwischen der prismatischen Soll-Wirkung und der Multifokaleigenschaft der Brillenlinse bei der Gestaltung der vom Auge weggewandten Linsefläche kompensierend in Betracht zu ziehen.
- die Dicke der Brillenlinse.
   Je nach Durchmesser und Gestalt des Brillengestells, für das die Brillenlinse bestimmt ist, werden verschiedene Dicken der Brillenlinse erforderlich. Die Dicke der Linse kann beispielsweise im Fernbezugspunkt oder im Zentrum der Linse festgelegt sein. Hierbei ist es ebenfalls günstig, die Dicke bei den oben genannten Änderungen zu berücksichtigen.

Bei der Brillenlinse der Brillenlinsenfamilie weist somit eine der beiden Linsenflächen eine Oberflächengestalt auf, die sich lediglich aus einer Sphäre und einem Torus zusammensetzt. Diese Flächengestalt ist in einer Massenfertigung, bei der allerdings an jeder Brillenlinse unterschiedliche Sphären oder Toren ausgebildet werden können, durch Einschleifen mittels geeignet gestalteter Schleifwerkzeuge relativ einfach fertigbar. Die vom Auge weggewandte Linsenfläche weist eine etwas kompliziertere Gestalt auf, da sie zum einen die Multifokaleigenschaft bereitstellt und zum anderen die vorangehend geschilderte Kompensation der Wechselwirkung zwischen der Fehlsichtigkeitskorrektion und der Multifokaleigenschaft und Optimierungen im Hinblick auf die Anordnung der Brillenlinse relativ zu dem Brillenträger bereitstellt.

Die Brillenlinse eignet sich besonders gut zu einer automatisierten Massenfertigung, wobei eine jede gefertigte Brillenlinse eine individuelle Gestaltung der dem Auge zugewandten Linsenfläche zur Korrektion der unterschiedlichen Fehlsichtigkeiten einer Vielzahl von Brillenträgern zulässt.

Die Erfindung wird nachfolgend anhand von Ausführungsformen in Verbindung mit den Zeichnungen näher erläutert. Hierbei zeigen:
- Fig. 1: schematisch eine Anordnung einer Brillenlinse vor dem Auge eines Brillenträgers,
- Fig. 2: in schematischer Darstellung einer Betrachtung eines Objekts im Nahbereich durch Brillengläser,
- Fig. 3: eine Darstellung astigmatischer Abweichungen im Gesichtsfeld bei einer Auslegung einer Multifokaleigenschaft der in Fig. 1 dargestellten Brillenlinse,
- Fig. 4: eine der Fig. 3 entsprechende Darstellung der sphärischen Abweichungen im Gesichtsfeld bei der Auslegung der Multifokaleigenschaft der Brillenlinse gemäß Fig. 1,
- Fig. 5: eine Tabelle zur Darstellung der Oberflächenkoordinaten der Grundgestalt der vom Auge weggewandten Linsenfläche einer Ausführungsform der erfindungsgemäßen Brillenlinsenfamilie,
- Fig. 6: eine Tabelle zur Darstellung der Koordinaten von Abweichungen von der Grundgestalt für eine Brillenlinse der Brillenlinsenfamilie mit einer kleinen astigmatischen Soll-Wirkung,

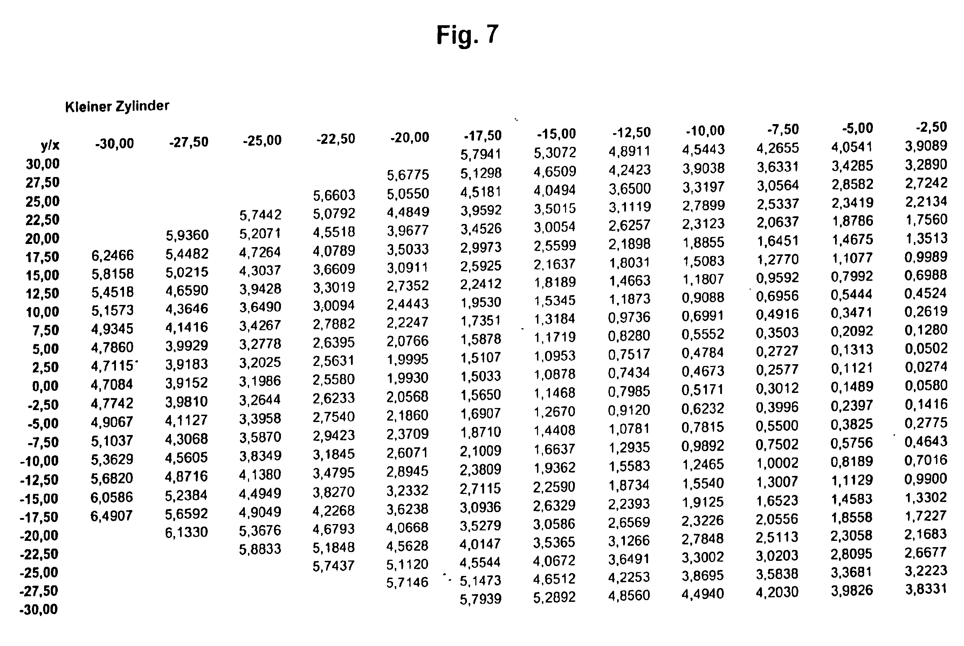

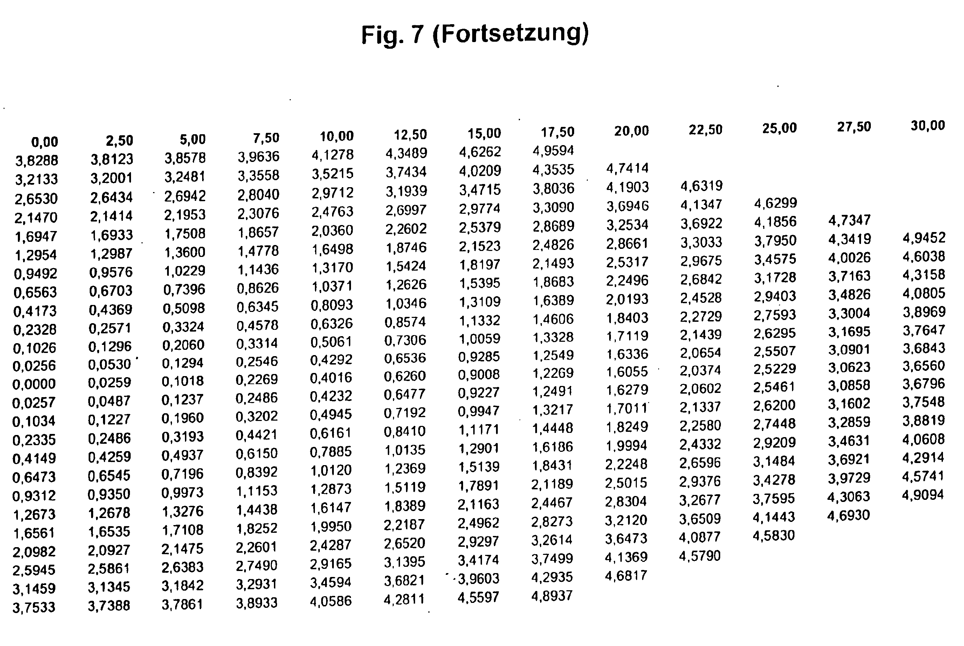

- Fig. 7: eine Tabelle zur Darstellung der Oberflächenkoordinaten der Brillenlinse mit den Abweichungen gemäß Fig. 6,
- Fig. 8: eine Tabelle zur Darstellung der Koordinaten von Abweichung von der Grundgestalt für eine Brillenlinse der Brillenlinsenfamilie mit einer relativ großen astigmatischen Soll-Wirkung,
- Fig. 9: eine Tabelle zur Darstellung der Oberflächenkoordinaten der Brillenlinse mit den Abweichungen gemäß Fig. 8,
- Fig. 10: eine nicht realisierbare ideale gewünschte Verteilung einer mittleren sphärischen Wirkung im Gesichtsfeld und
- Fig. 11: eine realitätsnahe gewünschte Verteilung der mittleren sphärischen Wirkung im Gesichtsfeld einer Brillenlinse.

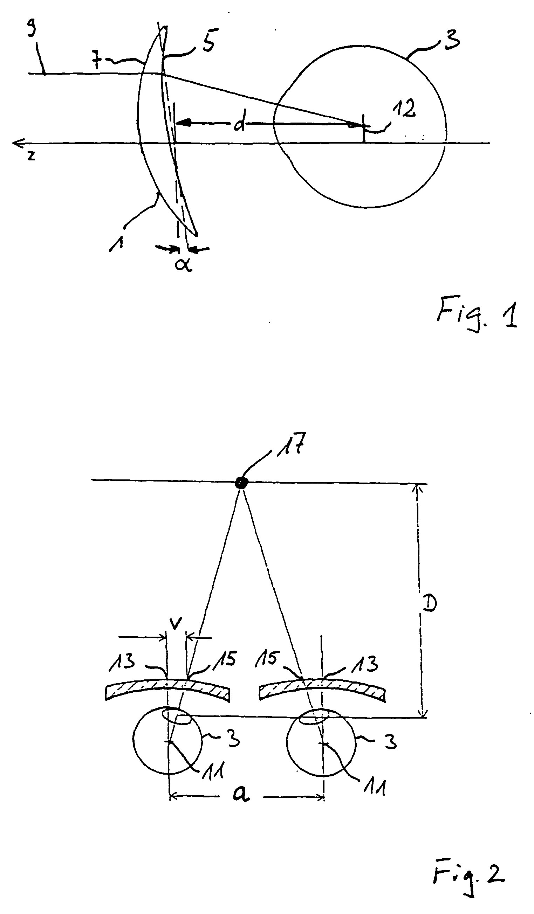

In Fig. 1 ist schematisch die Anordnung einer Brillenlinse 1 vor einem Auge 3 eines Brillenträgers dargestellt. Die Brillenlinse 1 weist eine dem Auge 3 zugewandte Linsenfläche 5 sowie eine vom Auge weggewandte Linsenfläche 7 auf. In der Figur ist weiter schematisch der Verlauf eines Lichtstrahls 9 durch die Brillenlinse 1 zu einem Augenmittelpunkt 12 des Auges 3 dargestellt. Die Linse 1 ist insgesamt, wie bei Brillenlinsen allgemein üblich, durchgebogen, so dass die Linsenfläche 7 eine konvexe Gestalt und entsprechend die Linsenfläche 5 eine konkave Gestalt aufweist.

Die dem Auge zugewandte Linsenfläche 5 dient im wesentlichen zur Korrektion eines astigmatischen Sehfehlers von 0,5 Dipotrien, wobei die entsprechende Zylinderachse unter einem Winkel von 90° zur Senkrechten ausgerichtet ist. Ein entsprechender Zylinderschliff ist in die Linsenfläche 5 eingebracht.

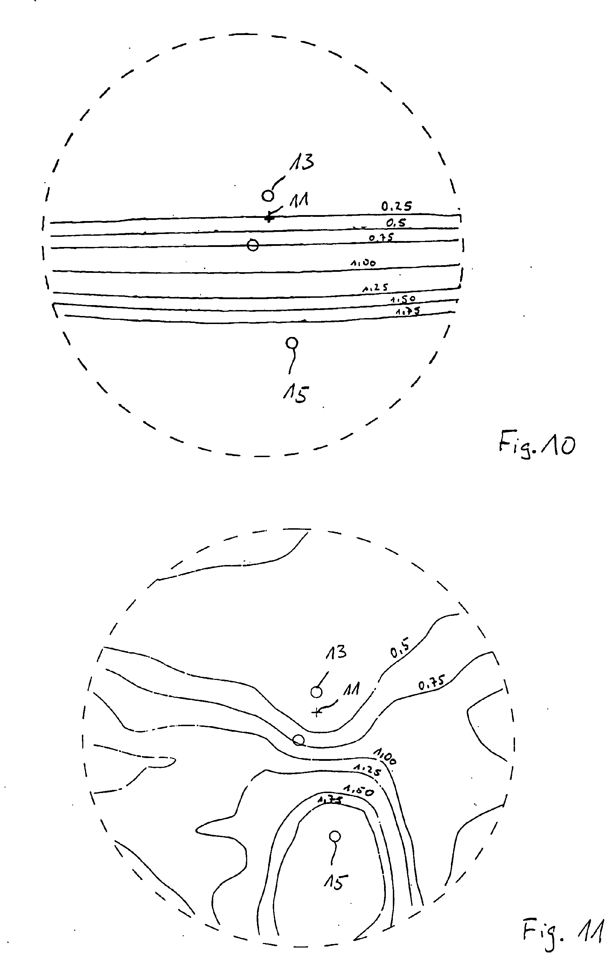

Die vom Auge wegweisende Linsenfläche 7 dient der Bereitstellung einer Multifokaleigenschaft der Brillenlinse 1. Eine mögliche ideale wünschenswerte Auslegung einer Multifokaleigenschaft der Brillenlinse 1 ist in Figur 10 dargestellt. Diese zeigt im Gesichtsfeld des Brillenträgers ein Linsenzentrum 11, einen Fernbezugspunkt 13 und einen Nahbezugspunkt 15 und stellt die Verteilung der mittleren sphärischen Wirkung der Brillenlinse im Gesichtsfeld dar.

Hierbei wird ein Bereich um den Fernbezugspunkt 13 vom Blick des Brillenträgers dann durchsetzt, wenn dessen Blick in etwa horizontal und in die Ferne gerichtet ist. Der Nahbezugspunkt 15 wird von dem Blick dann durchsetzt, wenn, wie in Fig. 2 dargestellt, ein nahegelegenes Objekt 17 mit nach unten gerichtetem Blick fokussiert wird. Aus den Darstellungen der Fig. 2 und 10 ist ersichtlich, dass die Nah- und Fernbezugspunkte 13, 15 nicht nur in vertikaler Richtung mit Abstand voneinander angeordnet sind, sondern dass der Nahbezugspunkt 15 bezüglich dem Fernbezugspunkt 13 auch um eine Strecke v horizontal nach innen, d.h. zur Nase des Brillenträgers hin, versetzt ist.

Die mittlere sphärische Wirkung der Brillenlinse am Fernbezugspunkt 13 unterscheidet sich von der mittleren sphärischen Wirkung am Nahbezugspunkt 15 um 2 Dioptrien, d.h., die sogenannte "Addition" beträgt 2,0.

Wie aus Fig. 10 ersichtlich ist, nimmt die mittlere sphärische Wirkung entlang einer Verbindungslinie zwischen Fernbezugspunkt und Nahbezugspunkt ausgehend vom Fernbezugspunkt 13 kontinuierlich zum Nahbezugspunkt 15 hin zu, wobei sich Linien gleicher sphärischer Wirkung in etwa horizontal im Gesichtsfeld erstrecken.

Eine ideale wunschgemäße Brillenlinse mit der Multifokaleigenschaft gemäß Fig. 10 hätte wunschgemäß ferner, abgesehen von einer astigmatischen dioptrischen Soll-Wirkung zur Korrektion der Fehlsichtigkeit des Brillenträgers eine astigmatische Wirkung von Null an allen Orten des Gesichtsfelds, um möglichst keine Verzerrungen des Bildes zu erzeugen.

Eine solche ideale Brillenlinse, das heißt eine Brillenlinse mit einer, abgesehen von der sphärischen Soll-Wirkung zur Korrektion der Fehlsichtigkeit, idealen Verteilung der mittleren sphärischen Wirkung gemäß Fig. 10 und einer, abgesehen von der astigmatischen Soll-Wirkung zur Korrektion der Fehlsichtigkeit idealen astigmatischen Wirkung von Null ist prinzipiell nicht zu realisieren.

Figur 11 zeigt eine realistischere Auslegung einer gewünschten Multifokaleigenschaft einer Brillenlinse, wobei dort Linien gleicher mittlerer sphärischer Wirkung nach Subtraktion der sphärischen Soll-Wirkung zur Korrektion der Fehlsichtigkeit dargestellt sind. Setzt man sich nun zum Ziel, die in Fig. 11 dargestellte gewünschte Verteilung der mittleren sphärischen Wirkung in einer Brillenlinse zu realisieren, bei der die astigmatische Wirkung, abgesehen von der astigmatischen Soll-Wirkung zur Korrektion der Fehlsichtigkeit, an allen Orten des Gesichtsfelds Null ist, so ist auch dies prinzipiell nicht möglich. Es werden nämlich bei dem Versuch, die mittlere sphärische Wirkung im Gesichtsfeld ortsabhängig zu ändern, unabweichlich astigmatische Fehler im Gesichtsfeld erzeugt.

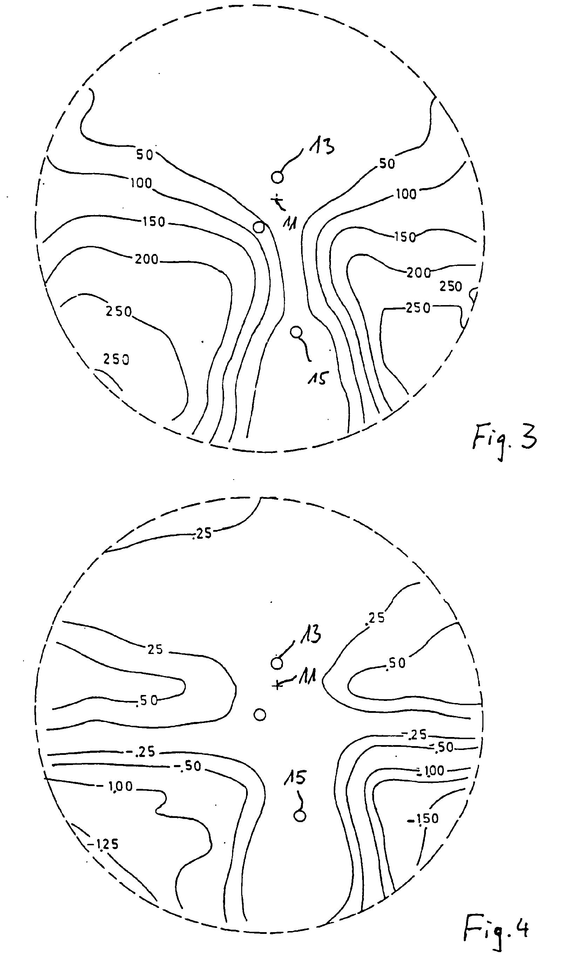

Es sei nun die Verteilung der gewünschten mittleren sphärischen Wirkung gemäß Fig. 11 und eine astigmatische Wirkung von überall Null im Gesichtsfeld als wünschenswertes Ziel bei der Gestaltung der Brillenlinse mit Multifokaleigenschaft angenommen. Da dies nicht möglich ist, werden eine Verteilung von Abweichungen im Hinblick auf die astigmatische Wirkung und eine Verteilung von Abweichungen im Hinblick auf die mittlere sphärische Wirkung im Gesichtsfeld entwickelt, welche für einen Benutzer als angenehm empfunden werden. Eine mögliche Verteilung von Abweichungen der astigmatischen Wirkung ist in Fig. 3 dargestellt und eine mögliche Verteilung der sphärischen Abweichungen im Gesichtsfeld ist in Fig. 4 dargestellt.

Auslegungen der Multifokaleigenschaft werden von einem Brillenträger üblicherweise dann als günstig empfunden, wenn die Abweichungen im Bereich unmittelbar an dem Nahbezugspunkt und dem Fernbezugspunkt sehr gering sind, in einem relativ breiten Bereich oberhalb des Fernbezugspunkts 13 relativ gering sind, in einem kanalartigen Verbindungsbereich zwischen Fernbezugspunkt 13 und Nahbezugspunkt 15 ebenfalls relativ gering sind und in einem geringfügig verbreiterten Bereich unterhalb des Nahbezugspunkts 15 ebenfalls relativ gering sind. In den übrigen Bereichen können dann die Abweichungen im Vergleich hierzu etwas erhöht sein (vgl. Fig. 3 und 4).

Eine derartige Auslegung der Multifokaleigenschaften der Linse 1 weisen noch eine Vielzahl anderer Linsen auf, welche von der Linse 1 hinsichtlich wenigstens ihrer dioptrischen Soll-Wirkung verschieden sind. Diese Brillenlinsen mit unterschiedlicher dioptrischer Soll-Wirkung und gemeinsamer Multifokaleigenschaft sind zu einer erfindungsgemäßen Brillenlinsenfamilie zusammengefasst. Die vom Auge weggewandten Linsenflächen 7 dieser Brillenlinsen weisen eine gemeinsame Grundgestalt auf, welche im wesentlichen im Hinblick auf die Bereitstellung der gemeinsamen Multifokaleigenschaft ausgelegt ist. Darüber hinaus weichen die vom Auge weggewandten Linsenflächen 7 von dieser Grundgestalt ab, um Wechselwirkungen zwischen der Multifokaleigenschaft und der dioptrischen Soll-Wirkung sowie weiter einer Wechselwirkung zwischen der Multifokaleigenschaft und der räumlichen Anordnung der Brillenlinse 1 vor dem Auge 3 des Brillenträgers Rechnung zu tragen. Parameter, die die Anordnung der Linse 1 vor dem Auge 3 charakterisieren, sind der Abstand d der Linse 1 von dem Augenmittelpunkt 11, die Neigung α der Linse bezüglich einer Blickrichtung geradeaus durch die Linse, der Abstand a der Augenmittelpunkte 11 der beiden Augen 3 des Brillenträgers voneinander und ein Abstand D zwischen Auge 3 und zu betrachtendem Objekt 17, wenn dieses im Nahbereich unter einer als angenehm empfundenen Entfernung angeordnet ist.

Die Abweichungen von der Grundgestalt können für jeden konkreten Fall einer zu fertigenden Brillenlinse mittels einer Optimierungsrechnung unter Einbeziehung der vorangehend genannten Parameter derart bestimmt werden, dass die die Brillenlinsenfamilie charakterisierende Multifokaleigenschaft im wesentlichen erzielt wird.

### Die Optimierungsrechnung kann folgendes beinhalten:

Es wird zunächst eine Soll-Multifokaleigenschaft zugrunde gelegt, welche durch die gewünschte Verteilung der sphärischen und astigmatischen Fehler im Gesichtsfeld bestimmt ist, wie dies beispielsweise in den Figuren 3 und 4 gezeigt ist. Die Verteilung der astigmatischen bzw. sphärischen Fehler im Gesichtsfeld entspricht dabei einer Abweichung zwischen der astigmatischen und der mittleren sphärischen Wirkung der zu fertigenden Linse von der astigmatischen bzw. der mittleren sphärischen Wirkung einer wünschenswerten, allerdings nicht realisierbaren idealen Linse. Die wünschenswerte ideale Linse kann beispielsweise eine Verteilung der mittleren sphärischen Wirkung aufweisen, wie es in Fig. 11 oder gar in Fig. 10 gezeigt ist.

Sodann wird für eine Linse, deren vom Auge wegweisende Linsenfläche die Grundgestalt aufweist, und deren dem Auge zuweisende Linsenfläche so ausgebildet ist, dass die dioptrische Soll-Wirkung erzielt wird, mit Hilfe einer Raytracing-Methode, bei der Strahlen von einem Objekt durch die Brillenlinse und zum Auge eines simulierten Brillenträgers hin verfolgt werden, die sphärische und die astigmatische Wirkung für eine Vielzahl von Punkten des Gesichtsfelds bestimmt.

Sodann wird von den an den verschiedenen Punkten des Gesichtsfeld durch Simulation erhaltenen Werten der mittleren sphärischen bzw. astigmatischen Wirkungen jeweils die sphärische dioptrische Soll-Wirkung bzw. die astigmatische dioptrische Soll-Wirkung zur Korrektion der Fehlsichtigkeit abgezogen. Von den sich ergebenden sphärischen bzw. astigmatischen Wirkungen an den verschiedenen Punkten werden dann die sphärischen bzw. die astigmatischen Wirkungen abgezogen, wie sie die wünschenswerte ideale Linse an den entsprechenden Punkten aufweist. Das Ergebnis hiervon ist eine Verteilung sphärischer bzw. astigmatischer Fehler im Gesichtsfeld, die zunächst von der in der Fig. 4 bzw. der Fig. 3 gezeigten Verteilung abweicht. Ziel der Optimierung ist es, die Gestalt der vom Auge wegweisenden Linsenfläche derart abzuändern, dass die errechnete Verteilung der sphärischen bzw. astigmatischen Fehler im Gesichtsfeld im wesentlichen der in der Fig. 4 bzw. der Fig. 3 gezeigten Verteilung entspricht. Hierzu wird in einem jeden Optimierungsschritt die vom Auge wegweisende Linsenfläche, welche aus der vorangehend beschriebenen Grundgestalt hervorgegangen ist, abgewandelt, und zwar derart, dass die Abweichungen zwischen den durch Simulation erhaltenen sphärischen bzw. astigmatischen Fehlerwerten und den durch die Soll-Multifokaleigenschaft (vergleiche Fig. 4 und 3) gegebenen Fehlerwerten reduziert werden.

Sodann wird für einen nächsten Schritt der Optimierungsrechnung eine neue vom Auge wegweisende Linsenfläche zugrunde gelegt, welche die ermittelten Abweichungen beinhaltet. Sodann werden erneut Abweichungen bestimmt und die vom Auge wegweisende Linsenfläche wird erneut korrigiert. Dieses Verfahren kann solange wiederholt werden, bis die Abweichungen zwischen der Soll-Multifokaleigenschaft und der von der errechneten Brille geleisteten Multifokaleigenschaft ausreichend gering sind.

Als ein Kriterium hierfür kann beispielsweise ein Differenzwert zwischen sphärischen bzw. astigmatischen Fehlern der Soll-Multifokaleigenschaft und der optimierten Brillenlinse dienen, der an sämtlichen Orten eines Bereichs des Gesichtsfelds unterschritten werden muß. Ein solcher Differenzwert weist vorzugsweise eine Größe von 0,5 Dioptrien, insbesondere 0,25 Dioptrien, und stärker bevorzugt 0,1 Dioptrien auf. Der Bereich des Gesichtsfelds bzw. der Linsenfläche, der hierbei berücksichtigt wird, umfasst mehr als 75% der Linsenfläche insbesondere mehr als 85% der Linsenfläche und, stärker bevorzugt, mehr als 95% der Linsenfläche.

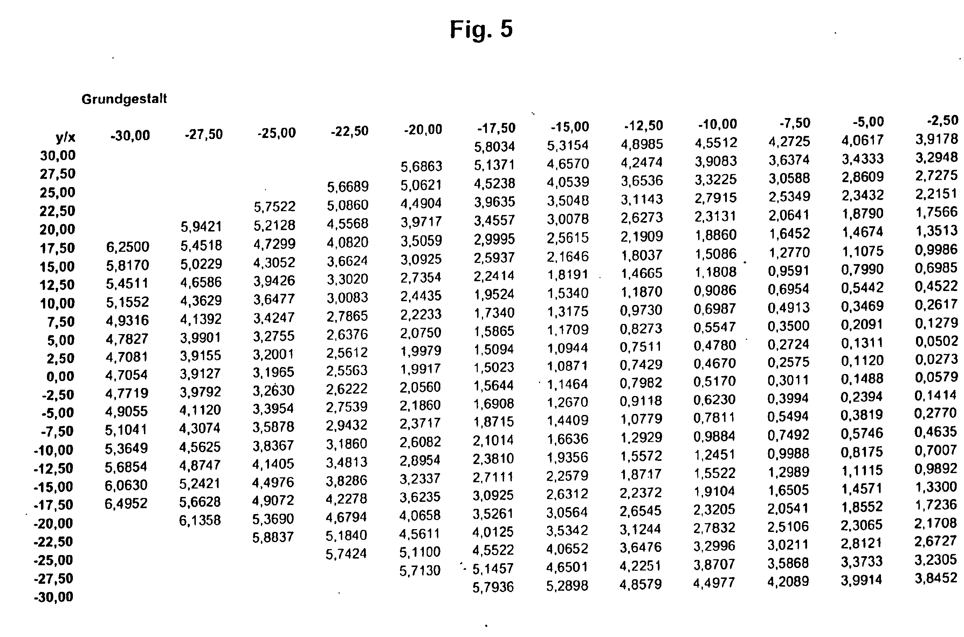

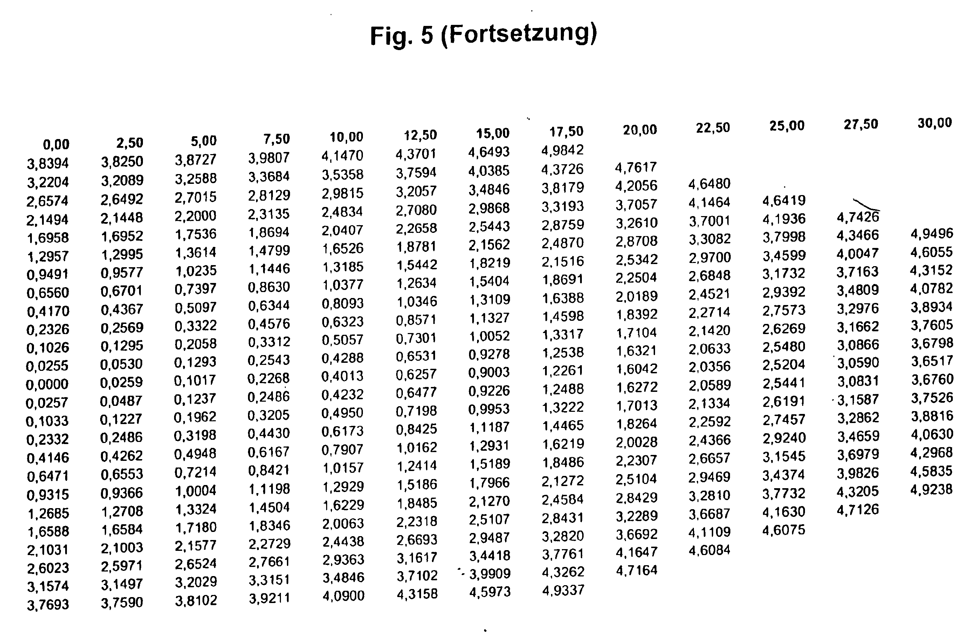

Fig. 5 stellt in tabellarischer Form die Oberflächenkoordinaten der Grundgestalt für eine Ausführungsform der erfindungsgemäßen Brillenlinsenfamilie dar, und zwar zur Bereitstellung einer Multifokaleigenschaft bei einer Addition von 2,0. Die Spalten entsprechen dabei den x-Koordinaten der Messpunkte im Abstand von jeweils 2,5 mm, die Zeilen entsprechen den y-Koordinaten der Messpunkte im Abstand ebenfalls 2,5 mm, und die Tabelleneinträge entsprechen den z-Koordinaten der Oberfläche der Grundgestalt in mm.

Eine solche Auslegung der Grundgestalt ist empirisch mit Hilfe von Versuchspersonen entwickelbar und führt zu der in den Fig. 3 und 4 dargestellten Verteilung der sphärischen und astigmatischen Abweichungen.

Es ist ebenfalls möglich, eine bereits bestehende Brillenlinse, welche von Brillenträgern als vorteilhaft empfunden wird, zu vermessen, um daraus die Verteilung der sphärischen und astigmatischen Abweichungen der bestehenden Brillenlinse zu gewinnen und daraus die Grundgestalt abzuleiten, welche bei der Fertigung der weiteren Brillenlinsen zugrunde zu legen ist.

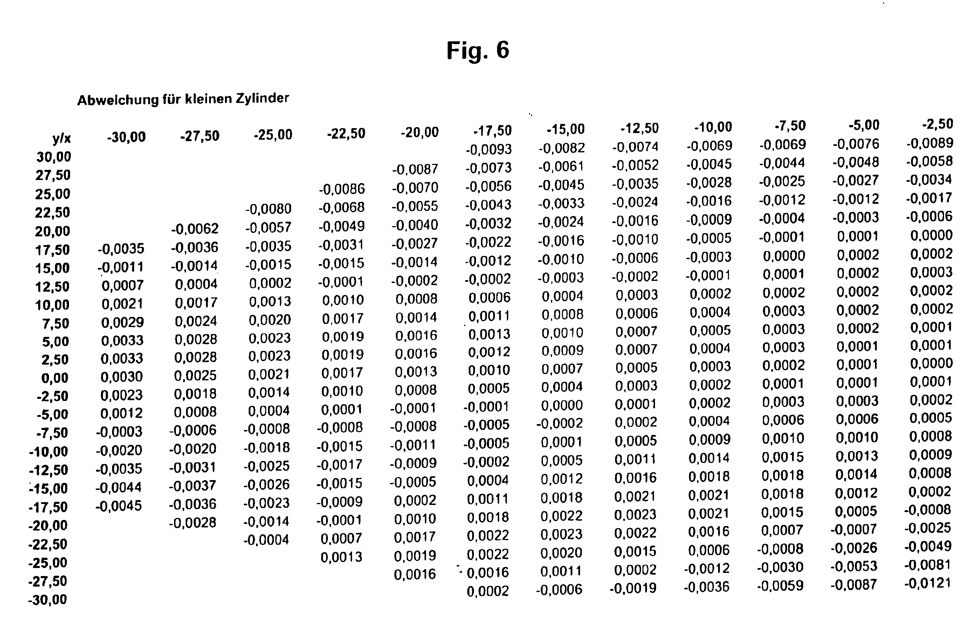

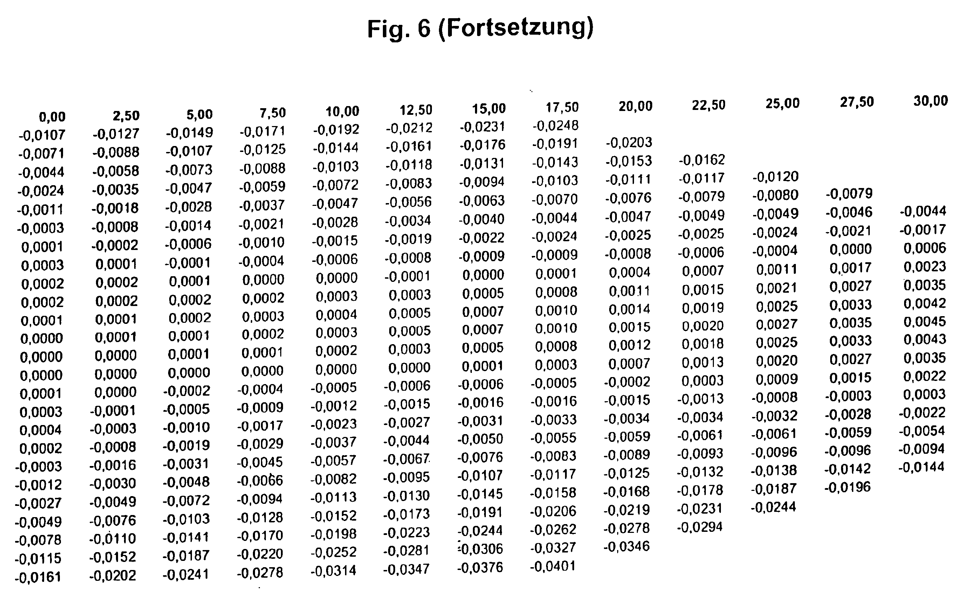

Fig. 6 ist eine der Fig. 5 entsprechende tabellarische Darstellung der Abweichung von der Grundgestalt der vom Auge wegweisenden Linsenfläche 7 für die Brillenlinse 1 mit einer sphärischen Soll-Wirkung von 0,0 und einer astigmatischen Soll-Wirkung von 0,5 Dioptrien bei einer Achslage von 90° und einem Linsendurchmesser von 70 mm. Diese Abweichungen können numerisch in einem Optimierungsverfahren derart bestimmt werden, dass schließlich unter Berücksichtigung der dioptrischen Soll-Wirkung sowie weiter optional der oben genannten Parameter d, α, a, D sowie der Linsendicke sich im wesentlichen die in den Fig. 3 und 4 dargestellten Abweichungen ergeben. Für das vorliegende Ausführungsbeispiel wurden für die Parameter d, α, a, D Durchschnittswerte für typische Brillenträger verwendet.

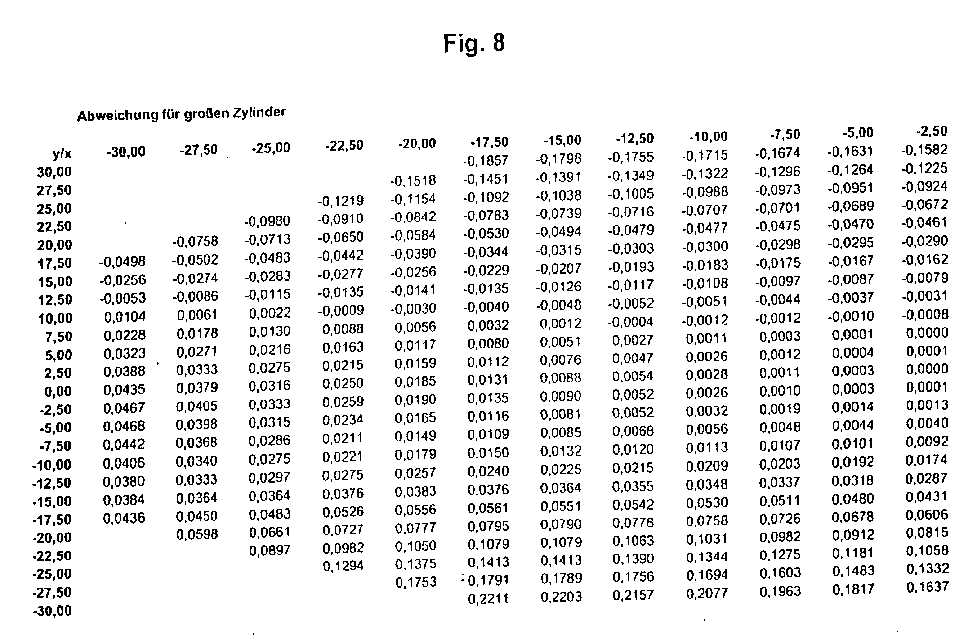

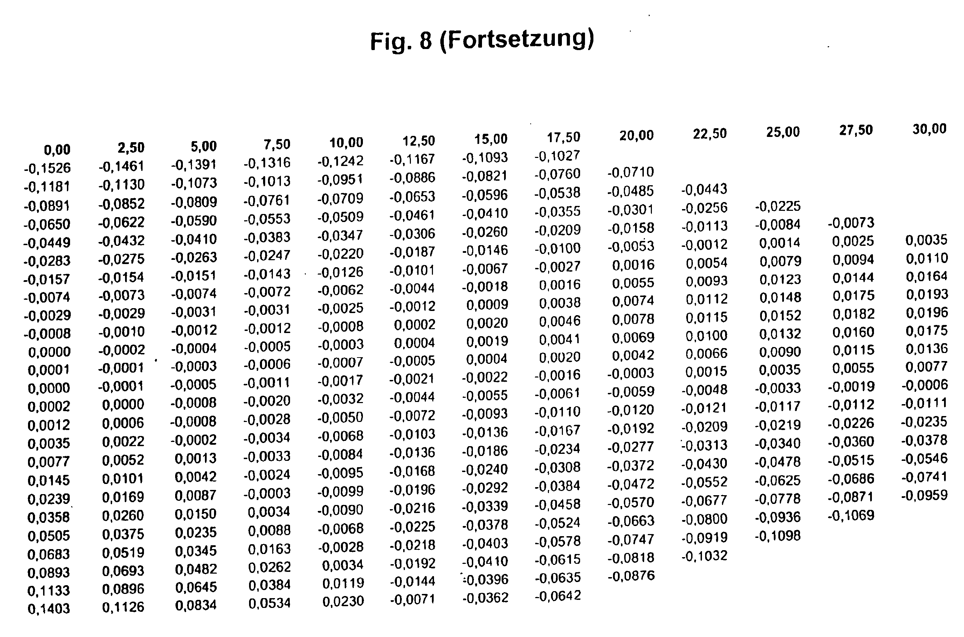

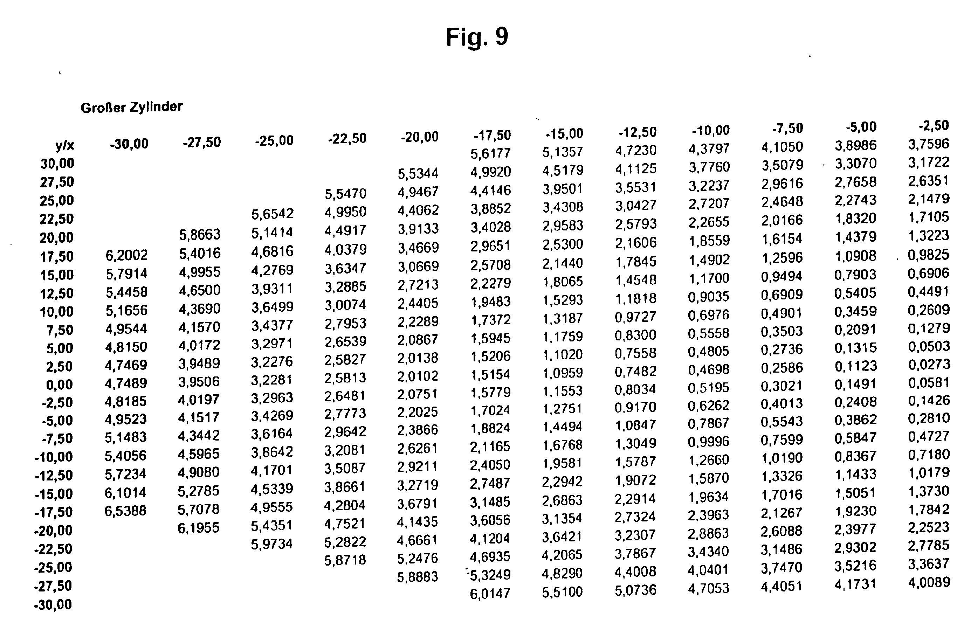

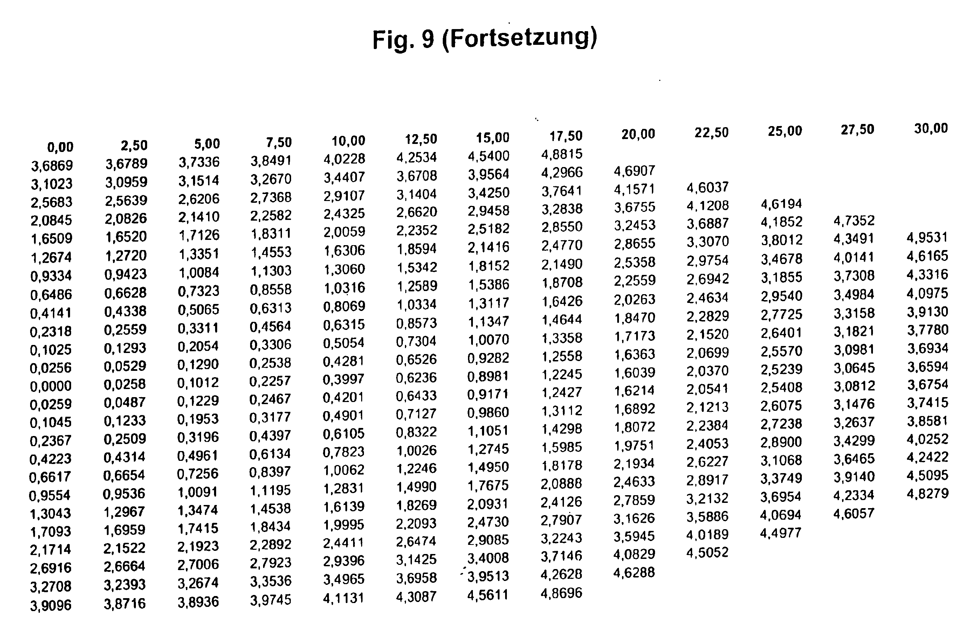

Im wesentlichen ähnliche Abweichungen wie die, die in den Fig. 3 und 4 dargestellt sind, ergeben sich für eine weitere Brillenlinse, die ebenfalls Mitglied der oben genannten Brillenlinsenfamilie ist und die eine sphärische Soll-Wirkung von -3,0 Dioptrien sowie eine astigmatische Soll-Wirkung von 4,0 Dioptrien unter einer Achslage von 60° und einen Linsendurchmesser von 70 mm aufweist. Deren Abweichung von der Grundgestalt gemäß Fig. 5 ist tabellarisch in Fig. 8 dargestellt, wobei die sich aus der Grundgestalt gemäß Fig. 5 und der Abweichung gemäß Fig. 8 zusammensetzende schließlich gefertigte Gestalt der vom Auge wegweisenden Linsenfläche dieser Brillenlinse in Fig. 9 dargestellt ist.

Für die Herstellung der vom Auge weggewandten Linsenfläche bietet sich beispielsweise ein Drehverfahren an, bei dem die Brillenlinse auf einem sich drehenden Teller festgehalten wird und ein Werkzeugmeissel sich relativ zu dem sich drehenden Teller von radial innen nach radial aussen bewegt und sich dabei in Axialrichtung entsprechend den Oberflächenkoordinaten der Linsenfläche 7 auf- und abbewegt, um Linsenmaterial abzutragen und schließlich die Gestalt der Oberfläche herzustellen. Anschließend kann die Linsenoberfläche einem Schleif- oder/und Poliervorgang unterzogen werden. Da bei dem Schleif- bzw. Poliervorgang ein Materialabtrag stattfindet, der nicht notwendigerweise über die gesamte Linsenfläche homogen ist, kann derartigen inhomogenen Materialabtragungen beim Schleif- bzw. Poliervorgang dadurch Rechnung getragen werden, dass an solchen Stellen, an denen erfahrungsgemäß ein erhöhter Materialabtrag stattfindet, die von dem Werkzeugmeissel gefertigte Oberfläche so abgewandelt ist, dass dort ein Materialvorrat bereitgestellt ist.

In der vorangehenden Beschreibung ist die dem Auge zugewandte Linsenfläche als die Linsenfläche beschrieben, welche unmittelbar auf die Korrektion der Fehlsichtigkeit ausgerichtet ist, während die vom Auge weggewandte Linsenfläche die Multifokaleigenschaft und die zusätzlichen Korrekturen bereitstellt. Die Brillenlinse kann aber auch derart ausgelegt sein, dass die dem Auge zugewandte Linsenfläche die Multifokaleigenschaften und die Korrekturen bereitstellt, während die vom Auge weggewandte Linsenfläche im Hinblick auf die Korrektion der Fehlsichtigkeit ausgerichtet ist.

## Patentansprüche

1. Verfahren der Herstellung einer Brillenlinsenfamilie mit einer Mehrzahl Brillenlinsen (1), wobei eine jede Brillenlinse (1) der Brillenlinsenfamilie aufweist:
- eine erste Linsenfläche (5) mit einer dioptrischen Soll-Wirkung zur Korrektion einer Fehlsichtigkeit eines Brillenträgers,
- eine zweite Linsenfläche (7) mit einer Multifokaleigenschaft, so dass sich entlang einer Linie zwischen einem Fernbezugspunkt (13) und einem mit Abstand von diesem angeordneten Nahbezugspunkt (15) die mittlere sphärische Wirkung von einem ersten Wert im Fernbezugspunkt (13) zu einem zweiten Wert im Nahbezugspunkt (15) kontinuierlich ändert;
wobei die Brillenlinsen (1) der Brillenlinsenfamilie jeweils eine gleiche Differenz zwischen dem ersten und dem zweiten Wert und voneinander um einen Rasterabstand von 0,5 oder 1 Dioptrie verschiedene dioptrische Soll-Wirkungen aufweisen;
das Verfahren umfassend:
Festlegen einer die Multifokaleigenschaft erzeugenden gemeinsamen Grundgestalt der zweiten Linsenfläche (7) der Brillenlinsen;
Bilden einer Gestalt der ersten Linsenfläche (5) der Brillenlinsen aus einer Sphäre oder/und einem Torus, um die jeweilige dioptrische Soll-Wirkung zu erzielen; Bereitstellen einer vorbestimmten Verteilung der aufgrund der jeweiligen Multifokaleigenschaft bedingten sphärischen und astigmatischen Abweichungen in dem Bereich des Gesichtsfelds bei den unter- schiedlichen dioptrischen Soll-Wirkungen der verschiedenen Brillenlinsen (1) der Brillenlinsen- familie, Fertigen der Brillenlinsen der Familie gemäß ihrer jeweiligen Gestalt und
dabei Abwandeln der Gestalt der zweiten Linsenfläche (7) einer jeden Brillenlinse (1) der Brillenlinsenfamilie von der Grundgestalt in Abhängigkeit von der jeweiligen dioptrischen Soll-Wirkung derart, dass sich eine Verteilung astigmatischer Fehler der gefertigten Brillenlinse und eine für alle Brillenlinsen gemeinsam vorbestimmte Verteilung astigmatischer Fehler an einander entsprechenden Orten eines Bereichs des Gesichtsfeldes voneinander um einen Differenzwert unterscheiden, der kleiner als 0,5 Dioptrien ist, und sich eine Verteilung sphärischer Fehler der gefertigten Brillenlinse und eine für alle Brillenlinsen gemeinsam vorbestimmte Verteilung sphärischer Fehler an den einander entsprechenden Orten des Bereichs des Gesichtsfeldes voneinander um einen Differenzwert unterscheiden, der kleiner als 0,5 Dioptrien ist, wobei, der Bereich des Gesichtsfelds mehr als 75% der Linsenfläche umfaßt.

2. Verfahren nach Anspruch 1, wobei der Differenzwert für die Verteilung der astigmatischen Fehler kleiner als 0,25 Dioptrien, insbesondere kleiner als 0,1 Dioptrien, ist.

3. Verfahren nach Anspruch 1 oder 2, wobei der Differenzwert für die Verteilung der sphärischen Fehler kleiner als 0,25 Dioptrien, insbesondere kleiner als 0,1 Dioptrien, ist.

4. Verfahren nach einem der Ansprüche 1 bis 3, wobei der Bereich eine Fläche von mehr als 85% der Linsenfläche, umfasst.

5. Verfahren nach einem der Ansprüche 1 bis 4, wobei die Gestalt der zweiten Linsenfläche (7) einer jeden Brillenlinse (1) der Brillenlinsenfamilie von der Grundgestalt in Abhängigkeit von dem jeweiligen Abstand (a) zwischen den beiden Augen (3) des Brillenträgers abgewandelt wird

6. Verfahren nach einem der Ansprüche 1 bis 5, wobei die Gestalt der zweiten Linsenfläche (7) einer jeden Brillenlinse (1) der Brillenlinsenfamilie von der Grundgestalt in Abhängigkeit von einem Abstand (d) zwischen dem Auge (3) des Brillenträgers und der Brillenlinse (1) in deren vorbestimmter Gebrauchsstellung abgewandelt wird

7. Verfahren nach einem der Ansprüche 1 bis 6, wobei die Gestalt der zweiten Linsenfläche (7) einer jeden Brillenlinse (1) der Brillenlinsenfamilie von der Grundgestalt in Abhängigkeit von einer Neigung (α) der Brillenlinse (1) bezüglich einer Blickrichtung des Brillenträgers in der vorbestimmten Gebrauchsstellung der Brillenlinse (1) abgewandelt wird.

8. Verfahren nach einem der Ansprüche 1 bis 7, wobei die Gestalt der zweiten Linsenfläche (7) einer jeden Brillenlinse (1) der Brillenlinsenfamilie von der Grundgestalt in Abhängigkeit von einem gewünschten Abstand (D) zwischen dem Auge (3) des Brillenträgers und einem zu betrachtenden Objekt (17), und zwar bei Blick durch den Nahbezugspunkt (15) der Brillenlinse (1) in deren vorbestimmter Gebrauchsstellung abgewandelt wird.

9. Verfahren nach einem der Ansprüche 1 bis 8, wobei die Gestalt der zweiten Linsenfläche (7) einer jeden Brillenlinse (1) der Brillenlinsenfamilie von der Grundgestalt in Abhängigkeit von einer prismatischen Soll-Wirkung der Brillenlinse (1) in deren vorbestimmter Gebrauchsstellung abgewandelt wird.

10. Verfahren nach einem der Ansprüche 1 bis 9, wobei die Gestalt der zweiten Linsenfläche (7) einer jeden Brillenlinse (1) der Brillenlinsenfamilie von der Grundgestalt in Abhängigkeit von einer Dicke (h) der Brillenlinse abgewandelt wird.

11. Verfahren nach einem der Ansprüche 1 bis 10, wobei die erste Linsenfläche der Brillenlinse die dem Auge (3) des Brillenträgers zugewandte Linsenfläche (5) ist und die zweite Linsenfläche die vom Auge (3) des Brillenträgers weggewandte Linsenfläche (7) ist.

12. Verfahren nach einem der Ansprüche 1 bis 11, wobei die Paare von Brillenlinsen (1) unterschiedliche Gestalten der vom Auge weggewandten Linsenflächen (7) aufweisen.

## Claims

1. A method for the manufacture of a spectacle lens family comprising a plurality of spectacle lenses (1), wherein each spectacle lens (1) of the spectacle lens family comprises:
- a first lens surface (5) having a nominal dioptric power for the correction of an eyesight deficiency of a spectacle lens wearer,
- a second lens surface (7) having a multifocal property such that, along a line between a far-vision reference point (13) and a near-vision reference point (15) spaced apart therefrom, the mean spherical power continuously changes from a first value at the far-vision reference point (13) to a second value at the near-vision reference point (15),
wherein the spectacle lenses (1) of the spectacle lens family each exhibit the same difference between the first value and the second value and exhibit different dioptric nominal powers with a grid spacing of 0.5 or 1 diopter;
wherein the method comprises:
determining a common basic shape of the second lens surface (7) of the spectacle lenses, said basic shape providing the multifocal property;
forming a shape of the first lens surface (5) of the spectacle lenses from a sphere or/and a torus to obtain the respective dioptric nominal power;
providing a predetermined distribution of the spherical and astigmatic aberrations, caused by the respective multifocal property, in the region of the field of view at the different dioptric nominal powers of the different spectacle lenses (1) of the spectacle lens family,
manufacturing the spectacle lenses of the family in accordance with their respective shape, and,
in so doing, modifying the shape of the second lens surface (7) of each spectacle lens (1) of the spectacle lens family as compared to the basic shape, depending on the respective dioptric nominal power, such that a distribution of the astigmatic aberrations of the finished spectacle lens and a predetermined distribution of astigmatic aberrations which is common to all spectacle lenses of the family differ from each other at locations corresponding to each other of a region of the field of view by a difference value which is smaller than 0.5 diopter, and a distribution of spherical aberrations of the finished spectacle lens and a predetermined distribution of spherical aberrations which is common to all spectacle lenses of the family differ from each other at locations corresponding to each other of said region of the field of view by a difference value which is less than 0.5 diopter, wherein the region of the field of view accounts for more than 75% of the lens surface.

2. The method according to claim 1, wherein the difference value for the distribution of the astigmatic aberrations is less than 0.25 diopter, in particular less than 0.1 diopter.

3. The method according to claim 1 or 2, wherein the difference value for the distribution of the spherical aberrations is less than 0.25 diopter, in particular less than 0.1 diopter.

4. The method according to one of claims 1 to 3, wherein said region comprises an area of more than 85% of the lens surface.

5. The method according to one of claims 1 to 4, wherein the shape of the second lens surface (7) of each spectacle lens (1) of the spectacle lens family is modified as compared to the basic shape depending on the respective distance (a) between both eyes (3) of the spectacle lens wearer.

6. The method according to one of claims 1 to 5, wherein the shape of the second lens surface (7) of each spectacle lens (1) of the spectacle lens family is modified as compared to the basic shape depending on the respective distance (d) between the eye (3) of the spectacle lens wearer and the spectacle lens (1) in its predetermined position of use.

7. The method according to one of claims 1 to 6, wherein the shape of the second lens surface (7) of each spectacle lens (1) of the spectacle lens family is modified as compared to the basic shape depending on an inclination (α) of the spectacle lens (1) in respect of a line of sight of the spectacle lens wearer in the predetermined position of use of the spectacle lens (1).

8. The method according to one of claims 1 to 7, wherein the shape of the second lens surface (7) of each spectacle lens (1) of the spectacle lens family is modified as compared to the basic shape depending on a desired distance (D) between the eye (3) of the spectacle lens wearer and an object (17) to be viewed, namely through the near-vision reference point (15) of the spectacle lens (1) in its predetermined position of use.

9. The method according to one of claims 1 to 8, wherein the shape of the second lens surface (7) of each spectacle lens (1) of the spectacle lens family is modified as compared to the basic shape depending on a nominal prismatic power of the spectacle lens (1) in its predetermined position of use.

10. The method according to one of claims 1 to 9, wherein the shape of the second lens surface (7) of each spectacle lens (1) of the spectacle lens family is modified as compared to its basic shape depending on a thickness (h) of the spectacle lens.

11. The method according to one of claims 1 to 10, wherein the first lens surface of the spectacle lens is the lens surface (5) facing the eye (3) of the spectacle lens wearer and the second lens surface is the lens surface (7) facing away from the eye (3) of the spectacle lens wearer.

12. The method according to one of claims 1 to 11, wherein the lens surfaces (7) facing away from the eye of the pairs of spectacle lenses (1) are of different shape.

## Revendications

1. Procédé de production d'une famille de verres de lunettes comportant plusieurs verres de lunettes (1), où un verre de lunette (1) respectif de la famille des verres de lunettes présente :
- une première surface de verre (5) ayant un effet dioptrique de consigne pour la correction d'un défaut de vision d'un porteur de lunettes,
- une seconde surface de verre (7) ayant une propriété multifocale, de sorte que le long d'une ligne entre un point de référence éloigné (13) et un point de référence proche (15) disposé à une distance de celui-ci, l'effet sphérique moyen d'une première valeur dans le point de référence éloigné (13) se modifie en continu en une seconde valeur dans le point de référence proche (15) ;
les verres de lunettes (1) de la famille de verres de lunettes présentant respectivement une différence identique entre la première valeur et la seconde valeur et présentant des effets dioptriques de consigne différents l'un de l'autre d'un espacement de 0,5 ou 1 dioptrie ;
le procédé comprenant :
la spécification d'une configuration de base commune produisant la propriété multifocale de la seconde surface de verre (7) des verres de lunettes ;
la construction d'une configuration d'une première surface de verre (5) des verres de lunettes à partir d'une sphère et/ou d'un tore pour obtenir l'effet dioptrique de consigne respectif ;
l'élaboration d'une répartition prédéfinie des aberrations sphériques et astigmatiques résultant de la propriété multifocale respective dans la zone du champ visuel par le biais de l'effet dioptrique de consigne différent des différents verres de lunettes (1) de la famille de verres de lunettes ;
la finition des verres de lunettes de la famille conformément à leur configuration respective,
la modification de la configuration de la seconde surface de verre (7) de chaque verre de lunette respectif (1) de la famille des verres de lunettes, par rapport à la configuration de base, en fonction de l'effet dioptrique de consigne respectif, étant telle qu'une répartition des aberrations astigmatiques du verre de lunette fini et qu'une répartition des aberrations astigmatiques prédéfinie conjointement pour tous les verres de lunettes au niveau d'emplacements correspondants d'une zone du champ visuel se distinguent l'une de l'autre d'une valeur de différence qui est inférieure à 0,5 dioptrie, et telle qu'une répartition des aberrations sphériques du verre de lunette fini et qu'une répartition des aberrations sphériques prédéfinie conjointement pour tous les verres de lunettes finis de la famille au niveau des emplacements correspondants de la zone du champ visuel se distinguent l'une de l'autre d'une valeur de différence qui est inférieure à 0,5 dioptrie, si bien que la zone du champ visuel affecte 75 % de la surface du verre.

2. Procédé selon la revendication 1, dans laquelle la valeur de différence pour la répartition des aberrations astigmatiques est inférieure à 0,25 dioptrie, en particulier inférieure à 0,1 dioptrie.

3. Procédé selon la revendication 1 ou 2, dans laquelle la valeur de différence pour la répartition des aberrations sphériques est inférieure à 0,25 dioptrie, en particulier inférieure à 0,1 dioptrie.

4. Procédé selon l'une des revendications 1 à 3, dans laquelle la zone affecte une surface égale à plus de 85 % de la surface du verre.

5. Procédé selon l'une des revendications 1 à 4, dans laquelle la configuration de la seconde surface de verre (7) d'un verre de lunette respectif (1) de la famille des verres de lunettes est modifiée par rapport à la configuration de base en fonction de l'écart (a) respectif entre les deux yeux (3) du porteur de lunettes.

6. Procédé selon l'une des revendications 1 à 5, dans laquelle la configuration de la seconde surface de verre (7) d'un verre de lunette respectif (1) de la famille des verres de lunettes est modifiée par rapport à la configuration de base en fonction d'un écart (d) entre l'oeil (3) du porteur de lunettes et le verre de lunette (1) dans sa position de port prédéfinie.

7. Procédé selon l'une des revendications 1 à 6, dans laquelle la configuration de la seconde surface de verre (7) d'un verre de lunette respectif (1) de la famille des verres de lunettes est modifiée par rapport à la configuration de base en fonction d'une inclinaison (α) du verre de lunette (1) par rapport à un axe de vision du porteur de lunettes dans sa position de port prédéfinie du verre de lunette (1).

8. Procédé selon l'une des revendications 1 à 7, dans laquelle la configuration de la seconde surface de verre (7) d'un verre de lunette respectif (1) de la famille des verres de lunettes est modifiée par rapport à la configuration de base en fonction d'un écart souhaité (D) entre l'oeil (3) du porteur de lunettes et un objet (17) à regarder, et ce lors d'une vision par le point de référence proche (15) du verre de lunette (1) dans sa position de port prédéfinie.

9. Procédé selon l'une des revendications 1 à 8, dans laquelle la configuration de la seconde surface de verre (7) d'un verre de lunette respectif (1) de la famille des verres de lunettes est modifiée par rapport à la configuration de base en fonction d'un effet prismatique de consigne du verre de lunette (1) dans sa position de port prédéfinie.

10. Procédé selon l'une des revendications 1 à 9, dans laquelle la configuration de la seconde surface de verre (7) d'un verre de lunette respectif (1) de la famille des verres de lunettes est modifiée par rapport à la configuration de base en fonction d'une épaisseur (h) du verre de lunette.

11. Procédé selon l'une des revendications 1 à 10, dans laquelle la première surface de lunette du verre de lunette est la surface de lunette (5) orientée vers l'oeil (3) du porteur de lunettes et la seconde surface du verre est la surface du verre (7) éloignée de l'oeil (3) du porteur de lunettes.

12. Procédé selon l'une des revendications 1 à 11, dans lequel les paires de verres de lunettes (1) présentent différentes configurations des surfaces de verre (7) éloignées de l'oeil.
